# EUROPÄISCHE PATENTSCHRIFT

(11) **EP 1 036 763 B1**
(45) Veröffentlichungstag und Bekanntmachung des Hinweises auf die Patenterteilung: **05.12.2001**
(21) Anmeldenummer: 99102661.8
(22) Anmeldetag: 12.02.1999
(51) Int. Cl.: C01B 33/12, C09B 63/00

(54) **Verfahren zur Herstellung gefärbter und fluoreszenter Polykieselsäure-Partikel**
Process for the preparation of coloured and fluorescent polysilicic acid particles
Procédé de préparation de particules d'acide polysilicique colorées et fluorescentes

(43) Veröffentlichungstag der Anmeldung: 20.09.2000
(73) Patentinhaber: micromod Partikeltechnologie GmbH, 18119 Rostock-Warnemünde (DE)
(72) Erfinder: Teller, Joachim Dr.rer.nat.habil., 18276 Mistorf (DE); Grüttner, Cordula Dr.rer.nat., 18273 Güstrow (DE); Rudershausen, Sandra Dr.rer.nat., 18057 Rostock (DE); Westphal, Fritz Dipl.-Phys., 18109 Rostock (DE)
(74) Vertreter: Schnick, Achim

(56) Entgegenhaltungen:
- US-A- 4 948 843
- HOFACKER S ET AL: "Hybrid pigments via sol-gel processing" J SOL GEL SCI TECHNOL;JOURNAL OF SOL-GEL SCIENCE AND TECHNOLOGY 1998 KLUWER ACADEMIC PUBLISHERS, DORDRECHT, NETHERLANDS, Bd. 13, Nr. 1-3, 1998, Seiten 479-484, XP002109628
- CHEMICAL ABSTRACTS, vol. 128, no. 25, 22. Juni 1998 (1998-06-22) Columbus, Ohio, US; abstract no. 315229, YAMADA KUNIKAZU ET AL.: "Colored silica fine particle, spacer using the particle for liquid crystal display device, and the display" XP002109629 & JP 10 104634 A (SEKISUI FINE CHEMICAL CO., LTD) 24. April 1998 (1998-04-24)
- PATENT ABSTRACTS OF JAPAN vol. 099, no. 002, 26. Februar 1999 (1999-02-26) & JP 10 306226 A (SEKISUI FINECHEM CO LTD), 17. November 1998 (1998-11-17)
- PATENT ABSTRACTS OF JAPAN vol. 098, no. 004, 31. März 1998 (1998-03-31) & JP 09 328624 A (NIPPON SHOKUBAI CO LTD), 22. Dezember 1997 (1997-12-22)
- SURATWALA T ET AL: "Photostability of silylated coumarin dyes in polyceram hosts" 8TH INTERNATIONAL WORKSHOP ON GLASSES AND CERAMICS FROM GELS, FARO, PORTUGAL, 18-22 SEPT. 1995, Bd. 8, Nr. 1-3, Seiten 973-978, XP002109656 Journal of Sol-Gel Science and Technology, 1997, Kluwer Academic Publishers, Netherlands ISSN: 0928-0707
- AVNIR D ET AL: "Organic fluorescent dyes trapped in silica and silica-titania thin films by the sol-gel method photophysical, film and cage properties" JOURNAL OF NON-CRYSTALLINE SOLIDS, 1 NOV. 1985, NETHERLANDS, Bd. 74, Nr. 2-3, Seiten 395-406, XP002109725 ISSN: 0022-3093

## Beschreibung

Die Erfindung betrifft ein Verfahren zur Herstellung von monodispersen Polykieselsäure-Partikeln.

Für sphärische Polykieselsäure-Partikel gibt es bereits eine Reihe von etablierten technischen Anwendungen. So haben sich diverse Typen von kugelförmigen Polykieselsäure-Teilchen im Größenbereich um 10 µm als Sorbentien bzw. Trägermaterial für chromatographische Verfahren und verwandte Trennprozesse bewährt. Im wissenschaftlich-technischen Gerätebau und in verschieden Anordnungen zur Kontrolle von Strömungsprozessen werden häufig monodisperse Polykieseisäure-Partikel mit Teilchendurchmessern im nm- und µm-Bereich verwendet. Silikatische Nanopartikel sind auch für verschiedene optische Anwendungen von Interesse. In jüngerer Zeit haben monodisperse sphärische Polykieselsäure-Partikel jedoch auch das gesteigerte Interesse weiterer Wissenschaftsdisziplinen und technischer Applikanten gefunden. Beispielsweise können derartige Partikel in unterschiedlichen Modifikationen in der Molekularbiologie zur Isolierung und Reinigung von Nukleinsäuren und Proteinen, in der Zellbiologie für Phagozytose-Untersuchungen, in der Klinischen Chemie als Bestandteil von diagnostischen Assays, in der Biochemie und Technischen Chemie als Festphasen für die Untersuchung vom Molecular Recognition-Phänomenen und heterogenkatalytischen Prozessen eingesetzt werden.

Die derzeit bekannten Verfahren zur Herstellung von monodispersen sphärischen Polykieselsäure-Partikeln basieren auf den Arbeiten von STÖBER et al. (J. Colloid & Interface Sci. 26, 62 (1968); 30, 568 (1969); US 3 634 588) und wurden nur exemplarisch weiterentwickelt (BOGUSH et al.: J. Colloid & Interface Sci. 142, 1 (1991); van BLAADEREN et al.: J. Colloid & Interface Sci. 154, 481 (1992); ZHANG et al.: J. Mater. Sci. Lett. 15, 1902 (1996)). UNGER et al. beschreiben in DE OS 3 534 143 die Herstellung von monodispersen, unporösen sphärischen Polykieselsäure-Partikeln durch kontrollierte Wachstumsprozesse und die Möglichkeit Organo(trialkoxy)silane in den klassischen STÖBER-Prozeß zu involvieren.

Die somit herstellbaren monodispersen sphärischen Polykieselsäure-Partikel sind jedoch für eine nachträgliche homogene Färbung und/oder eine Fluoreszenzmarkierung nicht geeignet. Generell ist die Kombination von (Fluoreszenz)farbstoffen mit (a)sphärischen Silikat-Partikeln bekannt und zwar in Form von Mischungen als Farbpigmente (EP 767 074, US 4 911 830 und US 5 591 787) oder als Farbbeschichtung ( US 3 930 063). Die ausdrücklich unspezifische Inkorporation von fluoreszenten Phthalocyaninderivaten wird in der Patentschrift US 5 763 189 unter anderem auch für Siliciumdioxid-Partikel beansprucht. Solche Mischungen aus (Fluoreszenz)farbstoffen und Siliciumdioxid-Partikeln besitzen allerdings die gemeinsame Eigenschaft, daß sie durch einfache chemische oder physikalische Trennmethoden, beispielsweise durch die Einwirkung von Extraktionsmitteln, in ihre Komponenten getrennt werden können.

Andererseits gibt es im Life-Science-Bereich bereits zahlreiche Partikelapplikationen, die auf eine Visualisierung von (sub)mikroskopischen Zuständen und Vorgängen hinauslaufen und/oder eine sichere Partikeldetektion erfordern.

Somit lag der vorliegenden Erfindung die Aufgabe zugrunde, monodisperse sphärische Polykieselsäure-Partikel zugänglich zu machen, die einstellbare Teilchendurchmesser zwischen 0,05 µm und 10 µm sowie eine homogene und hohe (Fluoreszenz)farbstoffdichte bzw. Farb-/Fluoreszenzintensität aufweisen. Die Oberfläche der erfindungsgemäßen Partikel soll dabei so gestaltet werden, daß sie möglichst wenig porös ist und daß die für überwiegend biochemische Anwendungen benötigten funktionellen Gruppen oder Sequenzen unmittelbar während oder nach der eigentlichen Partikelformation durch übliche Substitutions- oder Additionsreaktionen aufgebracht werden oder der jeweilige Anwender die Möglichkeit hat, ausgehend von einer standardisierten Oberflächenchemie, selbst die erforderliche Funktionalität zu erzeugen. Bei der Fülle der zur Verfügung stehenden (Fluoreszenz)farbstoffe sollte besonderer Wert auf eine weitgehende technologische Einheitlichkeit der erfindungsgemäßen Partikelsynthese gelegt werden.

Diese Aufgabe wird dadurch gelöst, daß die Partikelformation durch simultane oder aufeinanderfolgende Dosierung der Prekursoren Tetraalkoxysilan und terminal silylierter (Fluoreszenz)farbstoff in das Hydrolysemedium, bestehend aus Alkohol, Ammoniak und Wasser, erfolgt. Dabei kommt dem terminal silylierten (Fluoreszenz)farbstoff die allgemeine Formel R¹R²R³SiR⁴ zu, in der R¹, R² und R³ gleich oder verschieden sind und für Halogenatome, Alkyl-, Aryl-, Alkoxy oder Silyloxy-Gruppen stehen und R⁴ die komplexe Struktur Q¹-Xₘ-Yₙ-Q² besitzt, in der m und n die Werte Null und 1 annehmen können. Hierbei bedeutet Q¹ eine Alkylkette oder eine heteroanaloge Struktur mit vorzugsweise 1 bis 20 Kettengliedern. X steht für eine funktionelle Sequenz, die im Einzelfall Carbonyl-, Oxycarbonyl-, Aminocarbonyl- bzw. Aminothiocarbonyl-Gruppen oder ein Heteroatom beispielsweise Sauerstoff, Stickstoff oder Schwefel bedeuten kann. Y steht für eine bifunktionelle organische Sequenz mit Ketten- oder Ringstruktur, die mit Q² in geeigneter Weise verbunden ist. Dabei handelt es sich vorzugsweise um eine Alkyleneinheit oder substituierte und heteroanaloge Alkylengruppen, die mit Q² jeweils über ein Kohlenstoff-, Stickstoff-, Sauerstoff- oder Schwefelatom, beispielsweise als Ester oder Amid, verknüpft sind. Das bedeutet, daß die bifunktionelle Sequenz Y in R⁴ auch für Strukturelemente von Hydroxy- oder Aminocarbonsäuren sowie deren Ester und Amide stehen kann. Q² steht in der allgemeinen Formel R⁴ = Q¹-Xₘ-Yₙ-Q² für ein fluorophores System oder ein Farbstoffmolekül, das strukturell die Möglichkeit bietet an Y, oder wenn n gleich Null ist an X bzw. wenn m und n gleich Null sind, an Q¹ zu binden. Um dieses Bindungsverhalten zu realisieren, verfügt das Strukturelement Q² über eine oder mehrere funktionelle Gruppen, die den üblichen Reaktionsschemata von Substitution oder Addition zugänglich sind. Dabei handelt es sich im Einzelfall um Carbonsäureoder Sulfonsäuregruppen bzw. um deren aktivierte Derivate, um nukleophile Reste, wie Hydroxy-, Mercapto- oder Aminogruppen, um Strukturen, die über substituierbare Halogenatome verfügen, wie Halogenalkyl-, Halogenalkylcarbonyl- oder Halogenacylreste, um Epoxysequenzen oder analoge Systeme bzw. um Heterokumulene, wie Isocyanate oder Isothiocyanate, oder anderweitig aktivierte Mehrfachbindungssysteme. Es ist ebenso möglich, reaktive Textilfarbstoffe, z. B. vom Cibacron-Typ, der über reaktive Chlortriazinyl-Substrukturen verfügt, zum Aufbau der bindenden Sequenz in R⁴ zu nutzen. Für die Eignung als chromophores System in Q² sind strukturell keine Einschränkungen vorhanden. Nach dem erfindungsgemäßen Verfahren können alle gängigen Chromophore bzw. Fluorophore, wie benzoide und chinoide Aromaten und Heteroaromaten, beispielsweise Triarylmethane, Anthrachinone, Chromene, Xanthene, Indole, Chinoline, Acridine, Phenoxazine, Phenothiazine und Phenazine, aber auch Azound Stilbenfarbstoffe, Indigoderivate, Phthalocyanine und andere Tetrapyrrolfarbstoffe sowie Polymethine (Cyanine) in eine Polykieselsäure-Matrix eingearbeitet werden.

Aus synthesechemischer Sicht kann der Aufbau der Linkersequenz Q¹-Xₘ-Yₙ-Q² einoder mehrstufig ausgeführt werden. Es hat sich als günstig erwiesen, die Synthesestufen als Eintopf-Varianten durchzuführen. Dabei kann nicht ausgeschlossen werden, daß bedingt durch die Art und Anzahl der funktionellen Gruppen in den beteiligten Reaktanden Konstitutionsisomere oder Mehrfachverknüpfungen auftreten können, was jedoch für die Zielstellung der homogenen Partikelfärbung ohne Belang ist. Die zum Aufbau der Linkersequenz Q¹-Xₘ-Yₙ-Q² notwendigen Additions- und Substitutionsreaktionen werden in Lösungsmitteln durchgeführt, die mit dem Hydrolysegemisch bei der Partikelformation kompatibel sind. Dazu zählen Wasser, Alkohole und Ether und insbesondere dipolar aprotische Solventien, wie Aceton, Acetonitril, N,N-Dimethylformamid, N-Methyl-morpholinoxid oder Dimethylsulfoxid. Es besteht aber auch die Möglichkeit, zunächst in wenig polaren Lösungsmitteln, beispielsweise in (halogenierten) Kohlenwasserstoffen, zu arbeiten, diese Lösungsmittel zu evaporieren und den Rückstand in eines der vorstehend genannten Lösungsmittel zu überführen. Damit wird sichergestellt, daß für den Aufbau der Linkersequenz Q¹-Xₘ-Yₙ-Q² auch hydrolyseempfindliche Reaktanden und Intermediate zum Einsatz gelangen können.

Im Prozeß der Partikelformation können die terminal silylierten (Fluoreszenz)farbstoffe der allgemeine Formel R¹R²R³SiR⁴ entweder als isolierte chemische Verbindungen oder als in situ-Syntheseprodukte verwendet werden.

Dabei kann im Regelfall auf die Reinigung und Charakterisierung der terminal silylierten (Fluoreszenz)farbstoffe selbst sowie auf die der benötigten reaktiven Intermediate verzichtet werden, obwohl sie prinzipiell und unter Anwendung üblicher Mittel und Methoden möglich sind.

Um während der Partikelformation eine homogene Verteilung des (Fluoreszenz)farbstoffes zu erzielen, ist eine abgestimmte Reaktivität und ein geeignetes Verhältnis der Prekursoren Tetraalkoxysilan und terminal silylierter (Fluoreszenz)farbstoff erforderlich. Deshalb werden hauptsächlich Prekursoren verwendet, die über Methoxy- oder Ethoxysubstituenten am Silicium verfügen. Je nach dem (Fluoreszenz)farbstoff-Typ, dessen Derivatisierung und dem Verwendungszweck der zu synthetisierenden Polykieselsäure-Partikel kann das Verhältnis der Prekursoren relativ stark variieren und liegt üblicherweise zwischen 0,01 und 5 mol%.

Nach dem erfindungsgemäßen Verfahren ist es auch möglich, Farbnuancierungen und Mehrfachcolorierungen zu erreichen. Dazu werden bei der Partikelformation mehrere Prekursoren der allgemeinen Formel R¹R²R³SiR⁴, die sich in der Konstitution der verbundenen Sequenz Q¹-Xₘ-Yₙ-Q² und in der chemischen Struktur des fluorophoren Systems bzw. des Farbstoffes Q² unterscheiden, gleichzeitig oder nacheinander dosiert. Es hat sich aber als günstig erwiesen, die Anzahl terminal silylierter (Fluoreszenz)farbstoffe, die sich hinsichtlich der chemischen Struktur des fluorophoren Systems bzw. des Farbstoffes Q² unterscheiden, auf 2 bis 3 zu beschränken.

Die Copolykondensation zwischen den Prekursoren Tetraalkoxysilan und terminal silylierter (Fluoreszenz)farbstoff kann standardmäßig in einem auf 40 °C bis 70 °C thermostatisierten Rührreaktor ausgeführt.werden. Für die Herstellung kleiner Chargen ist es ebenso vorteilhaft, die Partikelformation in einem thermostatisierten, bei 50 min⁻¹ bis 150 min⁻¹ rotierenden Reaktionsgefäß vorzunehmen.

In einigen Fällen hat sich als sinnvoll bzw. notwendig erwiesen, der hydrolytischen Polykondensatiosreaktion neben verschiedenen Prekursoren weitere Additive zuzusetzen. So können verschiedene Tenside Mikroemulsionen als Reaktionsvolumina aufbauen oder Partikeldispersionen stabilisieren. Solche stabilisierenden Effekte können auch von als Peptisatoren wirksamen Metallsalzen ausgehen. Wird bei der Copolykondensation das Ziel verfolgt, die Polykieselsäure-Matrix anteilig durch analoge Strukturen, wie Aluminate oder Titanate, zu ersetzen oder mit anderen Metallen zu dotieren, kann dies erfolgen, indem Additive aus den Bereichen Metallsalze, -oxide, -hydroxyde und -alkoxyde bzw. Koordinationsverbindungen und freie Liganden oder daraus resultierende Kombinationen zugesetzt werden. Die Dosierung von Additiven aus vorstehenden Bereichen erfolgt unabhängig oder in synergistischer Weise zu Metallverbindungen, die bereits Bestandteil der (Fluoreszenz)farbstoff-Komponente Q², beispielsweise bei Metallphthalocyaninen oder Farblacken, sein können.

Das vorliegende Verfahren bietet somit die Möglichkeit, monodisperse Polykieselsäure-Partikel mit einstellbaren Durchmessern zwischen 0,05 µm und 10 µm herzustellen, die eine homogene und hohe (Fluoreszenz)farbstoffdichte bzw. Farb-/Fluoreszenzintensität aufweisen. Diese Partikel sind weiterhin durch eine ausgeprägte Sphärizität, geringe Variationskoeffizienten in der Größenverteilung und eine geringe Porosität der Oberfläche charakterisiert. Das Verfahren ist so angelegt, daß die Polykieselsäure-Partikel einen unterschiedlichen Farbstatus aufweisen können. Solche Partikeltypen besitzen im Einzelfall die nachfolgenden Merkmale: Einfachfärbung, additive Mehrfachfärbung, Fluoreszenz in einem definierten Wellenlängenbereich, gegebenenfalls auch außerhalb des sichtbaren Bereiches, Fluoreszenz in mehreren definierten Wellenlängenbereichen sowie Färbung und Fluoreszenz. Ein wesentlicher Vorteil des Herstellungsverfahrens besteht darin, daß die resultierenden Partikel sowohl in den gängigen Puffern wie auch in allen gebräuchlichen Lösungsmitteln elutionsstabil sind. Selbst bei einem mehrstündigen Schütteln in N,N-Dimethyl-formamid wird keine signifikante Freisetzung an (Fluoreszenz)farbstoffen beobachtet

Die erfindungsgemäßen Polykieselsäure-Partikel besitzen herstellungsbedingt eine hydrophile Oberfläche. Diese Oberfläche kann nach bekannten Methoden weiter modifiziert werden. Diese Methoden basieren im Regelfall auf Additions- und Substitutionsreaktionen. So kann durch Umsetzung der Partikel mit einer reaktiven Mischung aus Chlorsilanen und Hexamethyldisilazan oder Alkyltrialkoxysilanen eine hydrophobe Oberfläche erzeugt werden. Anderenfalls ermöglicht die Umsetzung mit einer reaktiven Mischung aus Chlorsilanen und (Aminoalkyl)trialkoxysilanen die Erzeugung einer Oberfläche, die über terminale Aminogruppen verfügt. Die Aminogruppen können ihrerseits erneut Ausgangspunkt für weitere Reaktionen beispielsweise mit Carbonylverbindungen sein. Die nach dem vorliegenden Verfahren herstellbaren Polykieselsäure-Partikel sind somit oberflächenfunktionell so ausgestattet, daß anwendungsspezifische funktionelle Gruppen, Sequenzen, Partialoder makromolekulare Strukturen erzeugt werden können. Desweiteren ist es möglich unterschiedliche Typen solcher Polykieselsäure-Partikel oberflächenchemisch so auszustatten, daß sie in Form stabiler Dispersionen untereinander kompatibel sind. Es besteht aber auch die Möglichkeit unterschiedliche Typen solcher Polykieselsäure-Partikel oberflächenchemisch so auszustatten, daß sie bedingt durch entgegengesetzte Dipole oder Ladungen, AntikörperlAntigen-Strukturen oder andere Prinzipien der molekularen Erkennung zu einer gezielten Aggregation geführt werden. Deshalb kann es für verschiedene Applikationen aus dem Life-Science-Bereich durchaus von Interesse sein, Mischungen von Polykieselsäure-Partikeln einzusetzen, die sich in Bezug auf den Teilchendurchmesser, den Farb-/Fluoreszenzeigenschaften und der Oberflächenfunktionalität unterscheiden können.

Die Erfindung soll anhand der nachfolgenden Beispiele und der Daten der Tabelle näher erläutert werden, ohne darauf beschränkt zu sein.

### Beispiel 1: Rhodamin-gefärbte Polykieselsäure-Partikel, d = 800 nm

50 mg (1,13 10⁻⁴ mol) Rhodamin B Base werden mit 40 µl konzentrierter Salzsäure (14,8 mg) und 1 ml H₂O am Rotationsverdampfer zur Trockne eingedampft und anschließend mit 5 ml CH₂Cl₂ versetzt.

Nach kurzer Ultraschallbehandlung im Wasserbad wird die Lösung mit 23,3 mg (1,13 10⁻⁴ mol) N, N'-Dicyclohexylcarbodiimid versetzt und 30 min bei Raumtemperatur geschüttelt.

Nach Zugabe von 20,3 mg (1,13 · 10⁻⁴ mol) (3-Aminopropyl)trimethoxysilan wird weitere 16 h geschüttelt. Dann wird die Reaktionsmischung filtriert und die resultierende rote Dichlormethan-Lösung für die Partikelsynthese eingesetzt.

Für die Partikelsynthese werden 76,6 ml Ethanol, 13,6 ml Ammoniak (25 %), 20 ml entionisiertes Wasser und 11,2 ml Tetraethoxysilan (TEOS) in einem rotierenden 1 I-Kolben gemischt und bei 40 °C thermostatisiert. 10 min nach Reaktionsbeginn wird das Rhodamin B-Derivat zur Partikelsuspension zugetropft. Anschließend werden weitere 11,2 ml TEOS zugetropft. 60 min nach Reaktionsbeginn wird die entstandene Suspension auf Raumtemperatur abgekühlt. Die Partikel werden durch Zentrifugation bei 2 000 U/min sukzessive mit 200 ml Ethanol, 200 ml Ethanol/Wasser (50/50 v/v) und dreimal mit 200 ml entionisiertem Wasser gewaschen.

### Beispiel 2: Aminofluorescein-gefärbte Polykieselsäure-Partikel. d = 800 nm

50 mg (1,44 · 10⁻⁴ mol) 4'-Amino-fluorescein in 8 ml Dimethylformamid werden mit 52,4 mg (2,12 · 10⁻⁴ mol) 3-(Triethoxysilyl)propyl-isocyanat versetzt und 2 h bei Raumtemperatur geschüttelt. Die Reaktionsmischung wird filtriert und die resultierende gelbe DMF-Lösung für die Partikelsynthese eingesetzt.

Für die Partikelsynthese werden 76,6 ml Ethanol, 13,6 ml Ammoniak (25 %), 20 ml entionisiertes Wasser und 11,2 ml Tetraethoxysilan in einem rotierenden 1 I-Kolben gemischt und bei 40 °C thermostatisiert. 10 min nach Reaktionsbeginn wird das Aminofluorescein-Derivat zur Partikelsuspension zugetropft. Anschließend werden weitere 11,2 ml TEOS zugetropft. 60 min nach Reaktionsbeginn wird die entstandene Suspension auf Raumtemperatur abgekühlt. Die Partikel werden durch Zentrifugation bei 2 000 U/min sukzessive mit 200 ml Ethanol, 200 ml Ethanol/Wasser (50/50 v/v) und dreimal mit 200 ml entionisiertem Wasser gewaschen.

### Beispiel 3: DAPI-gefärbte Polykieselsäure-Partikel, d = 800 nm

50 mg (1,43 · 10⁻⁴ mol) 4',6-Diamidino-2-phenyl-indol-dihydrochlorid (DAPI) in 8 ml Dimethylformamid werden mit 14,5 mg (1,43 · 10⁻⁴ mol) Triethylamin und 52,9 mg (2,14 · 10⁻⁴ mol) 3-(Triethoxysilyl)propyl-isocyanat versetzt und 2 h bei Raumtemperatur geschüttelt. Die Reaktionsmischung wird filtriert und die resultierende gelbgrüne DMF-Lösung für die Partikelsynthese eingesetzt.

Für die Partikelsynthese werden 76,6 ml Ethanol, 13,6 ml Ammoniak (25 %), 20 ml entionisiertes Wasser und 11,2 ml Tetraethoxysilan in einem rotierenden 1 I-Kolben gemischt und bei 40 °C thermostatisiert. 10 min nach Reaktionsbeginn wird das 4',6-Diamidino-2-phenyl-indol-dihydrochlorid-Derivat zur Partikelsuspension zugetropft. Anschließend werden weitere 11,2 ml TEOS zugetropft. 60 min nach Reaktionsbeginn wird die entstandene Suspension auf Raumtemperatur abgekühlt. Die Partikel werden durch Zentrifugation bei 2 000 U/min sukzessive mit 200 ml Ethanol, 200 ml Ethanol/Wasser (50/50 v/v) und dreimal mit 200 ml entionisiertem Wasser gewaschen.

### Beispiel 4: 4-(1-Pyrenyl)buttersäure-gefärbte Polykieselsäure-Partikel, 800 nm

50 mg (1,73 · 10⁻⁴ mol) 4-(1-Pyrenyl)buttersäure werden mit 5 ml Dioxan versetzt.

Nach kurzer Ultraschallbehandlung im Wasserbad wird die Lösung mit 35,7 mg (1,73 · 10⁻⁴ mol) N, N'-Dicyclohexylcarbodiimid versetzt und 30 min bei Raumtemperatur geschüttelt.

Nach Zugabe von 31 mg (1,73 · 10⁻⁴ mol) (3-Aminopropyl)trimethoxysilan wird weitere 16 h geschüttelt. Nach Filtration wird die resultierende gelbe Dioxan-Lösung für die Partikelsynthese eingesetzt

Für die Partikelsynthese werden 76,6 ml Ethanol, 13,6 ml Ammoniak (25 %), 20 ml entionisiertes Wasser und 11,2 ml Tetraethoxysilan in einem rotierenden 1 I-Kolben gemischt und bei 40 °C thermostatisiert. 10 min nach Reaktionsbeginn wird das 1-Pyren-buttersäure-Derivat zur Partikelsuspension zugetropft. Anschließend werden weitere 11,2 ml TEOS zugetropft. 60 min nach Reaktionsbeginn wird die entstandene Suspension auf Raumtemperatur abgekühlt. Die Partikel werden durch Zentrifugation bei 2 000 U/min sukzessive mit 200 ml Ethanol, 200 ml Ethanol/Wasser (50/50 v/v) und dreimal mit 200 ml entionisiertem Wasser gewaschen.

### Beispiel 5: 7-Methoxy-coumarin-4-essigsäure-gefärbte Polykieselsäure-Partikel, d = 800 nm

50 mg (2,14 · 10⁻⁴ mol) 7-Methoxy-coumarin-4-essigsäure werden mit 4 ml Dioxan versetzt. Nach kurzer Ultraschallbehandlung im Wasserbad wird die Lösung mit 44 mg (2,14 · 10⁻⁴ mol) N, N'-Dicyclohexylcarbodiimid versetzt und 30 min bei Raumtemperatur geschüttelt. Nach Zugabe von 38,3 mg (2,14 · 10⁻⁴ mol) (3-Aminopropyl)trimethoxysilan wird weitere 16 h geschüttelt. Es wird filtriert und die resultierende rote Dioxan-Lösung für die Partikelsynthese eingesetzt.

Für die Partikelsynthese werden 76,6 ml Ethanol, 13,6 ml Ammoniak (25 %), 20 ml entionisiertes Wasser und 11,2 ml Tetraethoxysilan in einem rotierenden 1 I-Kolben gemischt und bei 40 °C thermostatisiert. 10 min nach Reaktionsbeginn wird das 7-Methoxy-coumarin-4-essigsäure-Derivat zur Partikelsuspension zugetropft. Anschließend werden weitere 11,2 ml TEOS zugetropft. 60 min nach Reaktionsbeginn wird die entstandene Suspension auf Raumtemperatur abgekühlt. Die Partikel werden durch Zentrifugation bei 2 000 U/min sukzessive mit 200 ml Ethanol, 200 ml Ethanol/Wasser (50/50 v/v) und dreimal mit 200 ml entionisiertem Wasser ge-waschen.

### Beispiel 6: Nilblau-gefärbte Polykieselsäure-Partikel, d = 800 nm

50 mg (1,41 · 10⁻⁴ mol) Nilblauchlorid in 1 ml Dimethylformamid werden mit 54,4 mg (2,2 · 10⁻⁴ mol) 3-(Triethoxysilyl)propyl-isocyanat versetzt und 2 h bei Raumtemperatur geschüttelt. Die Reaktionsmischung wird filtriert und die resultierende blaue DMF-Lösung für die Partikelsynthese eingesetzt.

Für die Partikelsynthese werden 76,6 ml Ethanol, 13,6 ml Ammoniak (25 %), 20 ml entionisiertes Wasser und 11,2 ml Tetraethoxysilan in einem rotierenden 1 I-Kolben gemischt und bei 40 °C thermostatisiert. 10 min nach Reaktionsbeginn wird das Nilblau-Derivat zur Partikelsuspension zugetropft. Anschließend werden weitere 11,2 ml TEOS zugetropft. 60 min nach Reaktionsbeginn wird die entstandene Suspension auf Raumtemperatur abgekühlt. Die Partikel werden durch Zentrifugation bei 2 000 U/min sukzessive mit 200 ml Ethanol, 200 ml Ethanol/Wasser (50/50 v/v) und dreimal mit 200 ml entionisiertem Wasser gewaschen.

### Beispiel 7: Rhodamin- und Aminofluorescein-gefärbte Polykieselsäure-Partikel, d = 800 nm

50 mg (1,13 · 10⁻⁴ mol) Rhodamin B Base (M = 442,56 g/mol) werden mit 40 µl konzentrierter Salzsäure (14,8 mg) und 1 ml H₂O am Rotationsverdampfer zur Trockne eingedampft und anschließend mit 5 ml Dimethylformamid versetzt.

Nach kurzer Ultraschallbehandlung im Wasserbad wird die Lösung mit 23,3 mg (1,13 · 10⁻⁴ mol) N, N'-Dicyclohexylcarbodiimid versetzt und 30 min bei Raumtemperatur geschüttelt. Nach Zugabe von 20,3 mg (1,13 · 10⁻⁴ mol) (3-Aminopropyl) trimethoxysilan wird weitere 16 h geschüttelt. Dann wird die Reaktionsmischung filtriert.

50 mg (1,44 · 10⁻⁴ mol) 4'-Aminofluorescein in 8 ml Dimethylformamid werden mit 52,4 mg (2,12 · 10⁻⁴ mol) 3-(Triethoxysilyl)propyl-isocyanat versetzt und 2 h bei Raumtemperatur geschüttelt. Die Reaktionsmischung wird filtriert, mit der Lösung des Rhodamin B-Derivates gemischt und für die Partikelsynthese eingesetzt.

Für die Partikelsynthese werden 76,6 ml Ethanol, 13,6 ml Ammoniak (25 %), 20 ml entionisiertes Wasser und 11,2 ml Tetraethoxysilan in einem rotierenden 1 I-Kolben gemischt und bei 40 °C thermostatisiert. 10 min nach Reaktionsbeginn wird das Gemisch aus Aminofluorescein- und Rhodamin B-Derivat zur Partikelsuspension zugetropft. Anschließend werden weitere 11,2 ml TEOS zugetropft. 60 min nach Reaktionsbeginn wird die entstandene Suspension auf Raumtemperatur abgekühlt. Die Partikel werden durch Zentrifugation bei 2 000 U/min sukzessive mit 200 ml Ethanol, 200 ml Ethanol/Wasser (50/50 v/v) und dreimal mit 200 ml entionisiertem Wasser gewaschen.

### Beispiel 8: Rhodamin-, Aminofluorescein- und DAPI-gefärbte Polykieselsäure-Partikel, d = 800 nm

50 mg (1,43 · 10⁻⁴ mol) 4',6-Diamidino-2-phenyl-indol-dihydrochlorid in 8 ml Dimethylformamid werden mit 14,5 mg (1,43 · 10⁻⁴ mol) Triethylamin und 52,9 mg (2,14 10⁻⁴ mol) 3-(Triethoxysilyl)propyl-isocyanat versetzt und 2 h bei Raumtemperatur geschüttelt. Die Reaktionsmischung wird filtriert.

50 mg (1,13 · 10⁻⁴ mol) Rhodamin B Base werden mit 40 µl konzentrierter Salzsäure (14,8 mg) und 1 ml H₂O am Rotationsverdampfer zur Trockne eingedampft und anschließend mit 5 ml Dimethylformamid versetzt.

Nach kurzer Ultraschallbehandlung im Wasserbad wird die Lösung mit 23,3 mg (1,13 · 10⁻⁴ mol) N, N'-Dicyclohexylcarbodiimid versetzt und 30 min bei Raumtemperatur geschüttelt. Nach Zugabe von 20,3 mg (1,13 · 10⁻⁴ mol) (3-Aminopropyl) trimethoxysilan wird weitere 16 h geschüttelt. Dann wird die Reaktionsmischung filtriert.

50 mg (1,44 · 10⁻⁴ mol) 4'-Amino-fluorescein in 8 ml Dimethylformamid werden mit 52,4 mg (2,12 · 10⁻⁴ mol) 3-(Triethoxysilyl)propyl-isocyanat versetzt und 2 h bei Raumtemperatur geschüttelt. Die Reaktionsmischung wird filtriert, mit den Lösungen des Rhodamin B- und DAPI-Derivates gemischt und für die Partikelsynthese eingesetzt.

Für die Partikelsynthese werden 76,6 ml Ethanol, 13,6 ml Ammoniak (25 %), 20 ml entionisiertes Wasser und 11,2 ml Tetraethoxysilan in einem rotierenden 1 I-Kolben gemischt und bei 40 °C thermostatisiert. 10 min nach Reaktionsbeginn wird das Gemisch aus Aminofluorescein- und Rhodamin B-Derivat zur Partikelsuspension zugetropft. Anschließend werden weitere 11,2 ml TEOS zugetropft. 60 min nach Reaktionsbeginn wird die entstandene Suspension auf Raumtemperatur abgekühlt. Die Partikel werden durch Zentrifugation bei 2 000 U/min sukzessive mit 200 ml Ethanol, 200 ml Ethanol/Wasser (50/50 v/v) und dreimal mit 200 ml entionisiertem Wasser gewaschen.

### Beispiel 9: Rhodamin-gefärbte Polykieselsäure-Partikel, d = 80 nm

50 mg (1,13 · 10⁻⁴ mol) Rhodamin B Base werden mit 40 µl konzentrierter Salzsäure (14,8 mg) und 1 ml H₂O am Rotationsverdampfer zur Trockne eingedampft und anschließend mit 5 ml Methylenchlorid versetzt.

Nach kurzer Ultraschallbehandlung im Wasserbad wird die Lösung mit 23,3 mg (1,13 · 10⁻⁴ mol) N, N'-Dicyclohexylcarbodiimid versetzt und 30 min bei Raumtemperatur geschüttelt.

Nach Zugabe von 20,3 mg (1,13 · 10⁻⁴ mol) (3-Aminopropyl)trimethoxysilan wird weitere 16 h geschüttelt. Dann wird die Reaktionsmischung filtriert und die resultierende rote Dichlormethan-Lösung für die Partikelsynthese eingesetzt.

Für die Partikelsynthese werden 181,5 ml Ethanol, 68 ml Ammoniak (25 %), 301,5 ml entionisiertes Wasser und 56 ml Tetraethoxysilan in einem rotierenden 1 I-Kolben gemischt und bei 40 °C thermostatisiert. 10 min nach Reaktionsbeginn wird das Rhodamin B-Derivat zur Partikelsuspension zugetropft. Anschließend werden weitere 56 ml TEOS zugetropft. 60 min nach Reaktionsbeginn wird die entstandene Suspension auf Raumtemperatur abgekühlt. Die Partikel werden durch Ultrazentrifugation bei 20 000 U/min sukzessive mit 200 ml Ethanol, 200 ml Ethanol/Wasser (50/50 v/v) und dreimal mit 200 ml entionisiertem Wasser gewaschen.

### Beispiel 10: Pyren-1,3,6,8-tetrasulfonsäure-gefärbte Polykieselsäure-Partikel, d = 800 nm

50 mg (8,19 · 10⁻⁵ mol) Pyren-1,3,6,8-tetrasulfonsäure-Tetranatriumsalz-Hydrat werden mit 5 ml 0,1 M β-Morpholino-ethansulfonsäure-Hydrat (MES) -Puffer versetzt.

Nach kurzer Ultraschallbehandlung im Wasserbad wird die Lösung mit 38,9 mg (2,03 10⁻⁴ mol) 1-(3-Dimethylaminopropyl)-3-ethyl-carbodiimid-hydrochlorid (EDC) versetzt und 30 min bei Raumtemperatur geschüttelt.

Nach Zugabe von 32 mg (2,46 · 10⁻⁴ mol) 1,7-Diamino-heptan (M = 130,23 g/mol) in 3 ml 0,1 M MES-Puffer wird weitere 2 h geschüttelt. Die Lösung wird dann in 50 ml Isopropylalkohol überführt, der flockige Niederschlag durch Zentrifugation separiert, an der Luft getrocknet und anschließend in 8 ml Dimethylformamid gelöst. Nach Zugabe von 94,3 mg (3,8 · 10⁻⁴ mol =̂ 94,4 µl) 3-(Triethoxysilyl)propyl-isocyanat wird 2 h bei Raumtemperatur geschüttelt, filtriert und die resultierende Lösung für die Partikelsynthese eingesetzt.

Für die Partikelsynthese werden 181,5 ml Ethanol, 68 ml Ammoniak (25 %), 301,5 ml entionisiertes Wasser und 56 ml Tetraethoxysilan in einem rotierenden 1 I-Kolben gemischt und bei 40 °C thermostatisiert. 10 min nach Reaktionsbeginn wird das Pyren-1,3,6,8-tetrasulfonsäure-Derivat zur Partikelsuspension zugetropft. Anschließend werden weitere 56 ml TEOS zugetropft. 60 min nach Reaktionsbeginn wird die entstandene Suspension auf Raumtemperatur abgekühlt. Die Partikel werden durch Ultrazentrifugation bei 20 000 U/min sukzessive mit 200 ml Ethanol, 200 ml Ethanol/ Wasser (50/50 v/v) und dreimal mit 200 ml entionisiertem Wasser gewaschen.

### Beispiel 11: Lichtgrün-gefärbte Polykieselsäure-Partikel, d = 800 nm

500 mg (6,31 · 10⁻⁴ mol) Lichtgrün SF gelblich werden mit 10 ml Dimethylformamid versetzt. Nach kurzer Ultraschallbehandlung im Wasserbad wird die Lösung mit 130,2 mg (6,31 · 10⁻⁴ mol) N, N'-Dicyclohexylcarbodiimid (DCC) versetzt und 30 min bei Raumtemperatur geschüttelt.

Nach Zugabe von 113,1 mg (6,31 · 10⁻⁴ mol) (3-Aminopropyl)triethoxysilan wird weitere 16 h geschüttelt. Es wird filtriert und die resultierende grüne DMF-Lösung für die Partikelsynthese eingesetzt.

Für die Partikelsynthese werden 181,5 ml Ethanol, 68 ml Ammoniak (25 %), 301,5 ml entionisiertes Wasser und 56 ml Tetraethoxysilan in einem rotierenden 1 I-Kolben gemischt und bei 40 °C thermostatisiert. 10 min nach Reaktionsbeginn wird das Lichtgrün-Derivat zur Partikelsuspension zugetropft. Anschließend werden weitere 56 ml TEOS zugetropft. 60 min nach Reaktionsbeginn wird die entstandene Suspension auf Raumtemperatur abgekühlt. Die Partikel werden durch Ultrazentrifugation bei 20 000 U/min sukzessive mit 200 ml Ethanol, 200 ml Ethanol/Wasser (50/50 v/v) und dreimal mit 200 ml entionisiertem Wasser gewaschen.

### Beispiel 12: Reaktivrot-gefärbte Polykieselsäure-Partikel, d = 800 nm

50 mg (5,0 · 10⁻⁵ mol) Reaktivrot (Cibacron Brilliantrot 3B-A) werden mit 3 ml Dimethylformamid versetzt. Nach kurzer Ultraschallbehandlung im Wasserbad wird die Lösung mit 9,0 mg (5,0 · 10⁻⁵ mol =̂ 9 µl) (3-Aminopropyl)triethoxysilan weitere 16 h geschüttelt. Es wird filtriert und die resultierende rote DMF-Lösung für die Partikelsynthese eingesetzt.

Für die Partikelsynthese werden 181,5 ml Ethanol, 68 ml Ammoniak (25 %), 301,5 ml entionisiertes Wasser und 56 ml Tetraethoxysilan in einem rotierenden 1 I-Kolben gemischt und bei 40 °C thermostatisiert. 10 min nach Reaktionsbeginn wird das Reaktivrot-Derivat zur Partikelsuspension zugetropft. Anschließend werden weitere 56 ml TEOS zugetropft. 60 min nach Reaktionsbeginn wird die entstandene Suspension auf Raumtemperatur abgekühlt. Die Partikel werden durch Ultrazentrifugation bei 20 000 U/min sukzessive mit 200 ml Ethanol, 200 ml Ethanol/Wasser (50/50 v/v) und dreimal mit 200 ml entionisiertem Wasser gewaschen.

### Beispiel 13: Calceinblau-gefärbte Polykieselsäure-Partikel, d = 800 nm

50 mg (1,56 · 10⁻⁴ mol) Calceinblau werden mit 8 ml Dioxan versetzt. Nach kurzer Ultraschallbehandlung im Wasserbad wird die Lösung mit 64,2 mg (3,11 · 10⁻⁴ mol) N, N'-Dicyclohexylcarbodiimid (DCC) versetzt und 30 min bei Raumtemperatur geschüttelt.

Nach Zugabe von 55,8 mg (3,11 · 10⁻⁴ mol =̂ 54 µl) (3-Aminopropyl)trimethoxysilan wird die trübe Lösung weitere 16 h geschüttelt.

Es wird filtriert und die resultierende farblose Dioxan-Lösung für die Partikelsynthese eingesetzt.

Für die Partikelsynthese werden 181,5 ml Ethanol, 68 ml Ammoniak (25 %), 301,5 ml entionisiertes Wasser und 56 ml Tetraethoxysilan in einem rotierenden 1 I-Kolben gemischt und bei 40 °C thermostatisiert. 10 min nach Reaktionsbeginn wird das Calceinblau-Derivat zur Partikelsuspension zugetropft. Anschließend werden weitere 56 ml TEOS zugetropft. 60 min nach Reaktionsbeginn wird die entstandene Suspension auf Raumtemperatur abgekühlt. Die Partikel werden durch Ultrazentrifugation bei 20 000 U/min sukzessive mit 200 ml Ethanol, 200 ml Ethanol/Wasser (50/50 v/v) und dreimal mit 200 ml entionisiertem Wasser gewaschen.

### Beispiel 14: Ethidiumbromid-gefärbte Polykieselsäure-Partikel, d = 800 nm

50 mg (1,27 · 10⁻⁴ mol) Ethidiumbromid in 3 ml Dimethylformamid werden mit 58,4 mg (2,63 · 10⁻⁴ mol) Isophoron-diisocyanat versetzt und 2 h bei Raumtemperatur geschüttelt. Nach Zugabe von 47,2 mg (2,63 · 10⁻⁴ mol) (3-Aminopropyl)trimethoxysilan wird weitere 2 h bei Raumtemperatur geschüttelt, die Reaktionsmischung filtriert und die resultierende rote DMF-Lösung für die Partikelsynthese eingesetzt.

Für die Partikelsynthese werden 181,5 ml Ethanol, 68 ml Ammoniak (25 %), 301,5 ml entionisiertes Wasser und 56 ml Tetraethoxysilan in einem rotierenden 1 I-Kolben gemischt und bei 40 °C thermostatisiert. 10 min nach Reaktionsbeginn wird das Calceinblau-Derivat zur Partikelsuspension zugetropft. Anschließend werden weitere 56 ml TEOS zugetropft. 60 min nach Reaktionsbeginn wird die entstandene Suspension auf Raumtemperatur abgekühlt. Die Partikel werden durch Ultrazentrifugation bei 20 000 U/min sukzessive mit 200 ml Ethanol, 200 ml Ethanol/Wasser (50/50 v/v) und dreimal mit 200 ml entionisiertem Wasser gewaschen.

### Beispiel 15: Amino-modifizierte Polykieselsäure-Partikel, d = 800 nm

2 g Polykieselsäure-Partikel (aus Beispiel 1) werden 2 h bei 150 °C im Vakuum entwässert und anschließend in 60 ml Tetrahydrofuran aufgeschlämmt. Nach

Zugabe von 40 µl Diphenyl-dichlorsilan wird die Reaktionsmischung 1 h in einem rotierenden Kolben bei Raumtemperatur aktiviert. Dann werden 2 ml (3-Aminopropyl)triethoxysilan zugegeben und die Reaktionsmischung im rotierenden Kolben 20 h bei 50 °C thermostatisiert.

Die Partikel werden durch Zentrifugation bei 2 000 U/min sukzessive dreimal mit je 60 ml Tetrahydrofuran und zweimal mit je 50 ml Diethylether gewaschen und luftgetrocknet.

### Beispiel 16: Maleinsäure-derivatisierte Polykieselsäure-Partikel, d = 800 nm

2 g amino-modifizierte Polykieselsäure-Partikel (aus Beispiel 10) werden in 50 ml Methylenchlorid mit 19,6 mg (2 · 10⁻⁴ mol) Maleinsäureanhydrid 12 h bei Raumtemperatur geschüttelt. Danach werden die Partikel durch Zentrifugation bei 2 000 U/min zweimal mit je 50 ml Methylenchlorid gewaschen und luftgetrocknet.

### Beispiel 17: Citronensäure-modifizierte fluoreszente Polykieselsäure-Partikel, d = 800 nm

2 g amino-modifizierte Polykieselsäure-Partikel (aus Beispiel 15) werden in 20 ml 0,1 M β-Mor-pholino-ethansulfonsäure-Hydrat (MES)-Puffer resuspendiert. 20 mg (1,04 · 10⁻⁴ mol) 1-(3-Dimethylaminopropyl)-3-ethyl-carbodiimid-hydrochlorid (EDC) werden mit 20 mg (1,04 · 10⁻⁴ mol) Citronensäure in 5 ml 0,1 M β-Morpholinoethansulfonsäure-Hydrat (MES)-Puffer gelöst und 10 min bei 50 °C inkubiert. Diese Lösung wird zur Partikel-suspension gegeben und 2 h bei Raumtemperatur geschüttelt. Danach werden die Partikel durch Zentrifugation bei 2 000 U/min zweimal mit je 50 ml Wasser ge-waschen und luftgetrocknet.

### Beispiel 18: Trimethylsilyl-modifizierte Polykieselsäure-Partikel, d = 800 nm

2 g Polykieselsäure-Partikel (aus Beispiel 2) werden 2 h bei 150 °C im Vakuum entwässert und anschließend in 40 ml Tetrahydrofuran aufgeschlämmt. Nach Zugabe von 40 µl Diphenyl-dichlorsilan wird die Reaktionsmischung 1 h in einem rotierenden Kolben bei Raumtemperatur aktiviert. Dann werden 2 ml Hexamethyldisilazan zugegeben und die Reaktionsmischung im rotierenden Kolben 20 h bei 50 °C thermostatisiert.

Die Partikel werden durch Zentrifugation bei 2 000 U/min sukzessive dreimal mit je 60 ml Tetrahydrofuran und zweimal mit je 50 ml Diethylether gewaschen.

### Beispiel 19: Glutaraldehyd-modifizierte fluoreszente Polvkieselsäure-Partikel, d = 800 nm

2 g gefärbte Polykieselsäure-Partikel (aus Beispiel 2) werden in 20 ml Wasser resuspendiert und mit 360 µl (2,01 · 10⁻³ mol) 50 % Glutaraldehydlösung 1 h bei 50 °C geschüttelt. Danach werden die Partikel durch Zentrifugation bei 2 000 U/min zweimal mit je 50 ml Wasser gewaschen und luftgetrocknet.

### Beispiel 20: Phosphat-derivatisierte fluoreszente Polykieselsäure-Partikel, d = 800 nm

142 mg (10⁻³ mol) Diphosphorpentoxid werden in 30 ml Dioxan weitgehend gelöst. Zu dieser Lösung werden 1 g gefärbte Polykieselsäure-Partikel (aus Beispiel 1) gegeben und 2 h bei 50 °C geschüttelt. Nach Zentrifugation bei 2 000 U/min werden sehr langsam unter Schütteln 20 ml Wasser zum Sediment gegeben. Nach

Resuspendieren der Partikel wird der Waschprozeß noch zweimal wiederholt.

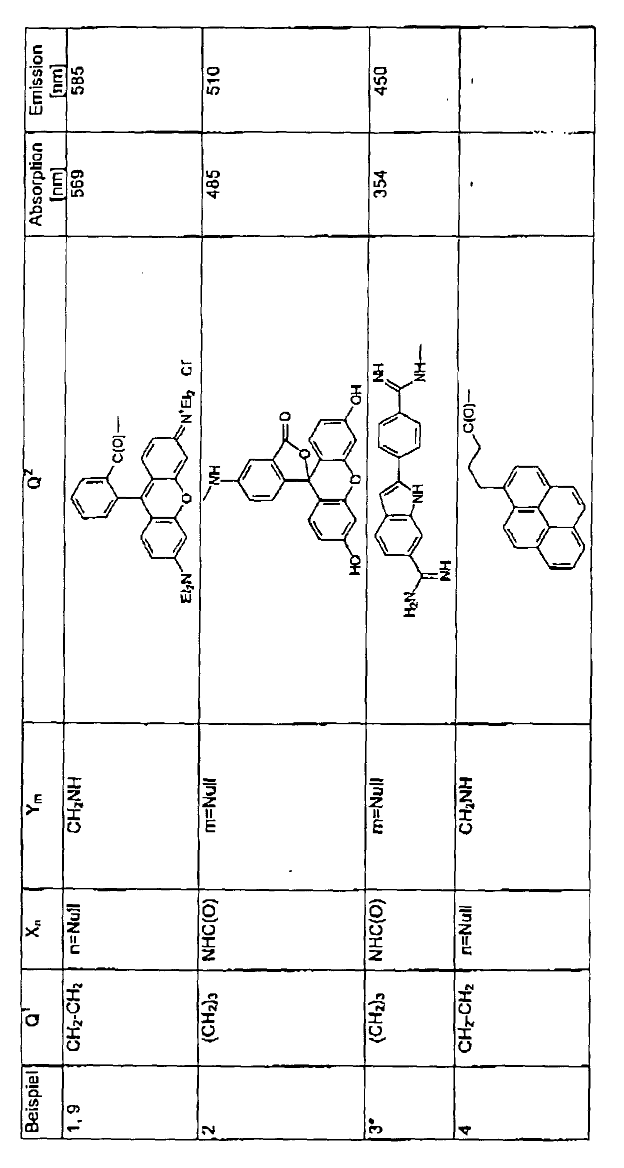

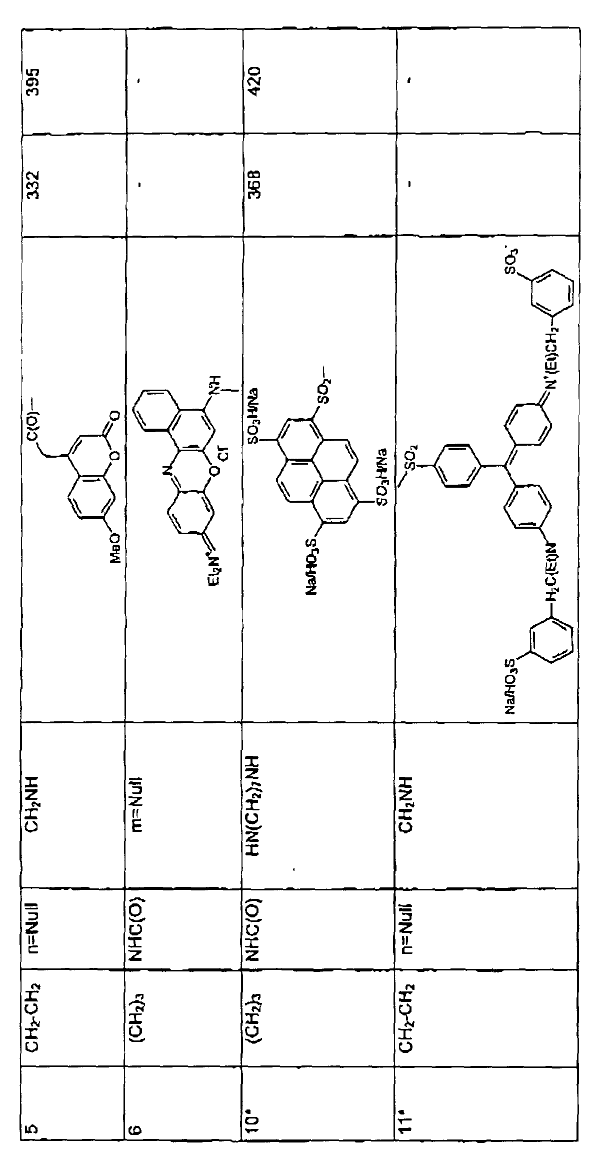

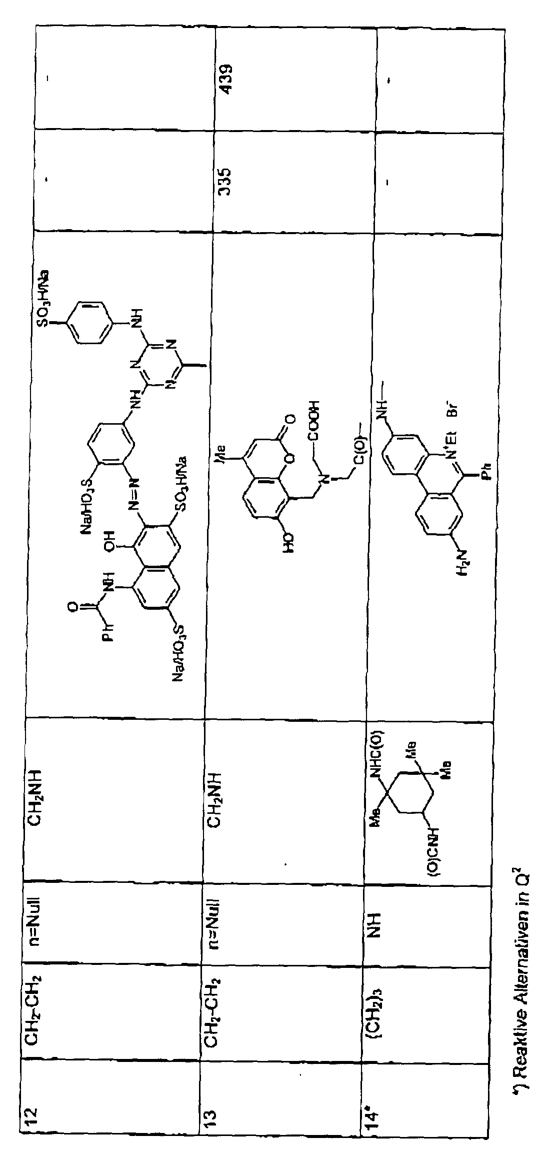

## Patentansprüche

1. Verfahren zur Herstellung von monodispersen Polykieselsäure-Partikeln, **dadurch gekennzeichnet, daß** die Partikelformation durch simultane oder aufeinanderfolgende Dosierung der Prekursoren Tetraalkoxysilan und terminal silylierter (Fluoreszenz)farbstoff der allgemeinen Formel R¹R²R³SiR⁴, in der R¹, R² und R³ gleich oder verschieden sind und für Halogenatome, Alkyl-, Aryl-, Alkoxy oder Silyloxy-Gruppen stehen und R⁴ die komplexe Struktur Q¹-Xₘ-Yₙ-Q² besitzt, in der m und n die Werte Null und 1 annehmen können, Q¹ eine Alkylkette oder eine heteroanaloge Struktur mit vorzugsweise 1 bis 20 Kettengliedern bedeutet, X für eine funktionelle Sequenz steht, Y eine bifunktionelle organische Sequenz mit Kettenoder Ringstruktur bedeutet, die mit Q² in geeigneter Weise verbunden ist und in der Q² für ein fluorophores System oder ein Farbstoffmolekül steht, das strukturell die Möglichkeit bietet an Y, oder wenn n gleich Null ist an X bzw. wenn m und n gleich Null sind an Q¹ zu binden, in das Hydrolysemedium, bestehend aus Alkohol, Ammoniak und Wasser, erfolgt und zu monodispers verteilten Partikeln mit einstellbaren Teilchendurchmessern zwischen 0,05 µm und 10 µm sowie homogener und hoher (Fluoreszenz)farbstoffdichte bzw. Farb/Fluoreszenzintensität führt.

2. Verfahren nach Anspruch 1, **dadurch gekennzeichnet, daß** die funktionelle Sequenz X in R⁴ für Carbonyl-, Oxycarbony!-, Aminocarbonyl- bzw. Aminothiocarbonyl-Gruppen oder für ein Heteroatom beispielsweise Sauerstoff, Stickstoff oder Schwefel steht.

3. Verfahren nach den Ansprüchen 1 bis 2, **dadurch gekennzeichnet, daß** die bifunktionelle Sequenz Y in R⁴ vorzugsweise für eine Alkyleneinheit oder für substituierte und heteroanaloge Alkylengruppen steht, die mit Q² über ein Kohlenstoff-, Stickstoff-, Sauerstoff- oder Schwefelatom, beispielsweise a!s Ester oder Amid, verknüpft ist.

4. Verfahren nach den Ansprüchen 1 bis 3, **dadurch gekennzeichnet, daß** die bifunktionelle Sequenz Y in R⁴ für Strukturelemente von Hydroxy- oder Aminocarbonsäuren sowie deren Ester und Amide steht.

5. Verfahren nach den Ansprüchen 1 bis 4, **dadurch gekennzeichnet, daß** die Alkoxygruppen in den Prekursoren Kettenlängen von 1 bis 4 Kohlenstoffatomen aufweisen und vorzugsweise für Ethoxygruppen stehen.

6. Verfahren nach den Ansprüchen 1 bis 5, **dadurch gekennzeichnet, daß** das Verhältnis der Prekursoren so eingestellt wird, daß der gebundene (Fluoreszenz)farbstoff einen Anteil von 0,01 bis 5 mol% aufweist.

7. Verfahren nach den Ansprüchen 1 bis 6, **dadurch gekennzeichnet, daß** bei der Partikelformation mehrere Prekursoren der allgemeinen Formel R¹R²R³SiR⁴, die sich in der Konstitution der verbundenen Sequenz Q¹-Xₘ-Yₙ-Q² und in der chemischen Struktur des fluorophoren Systems bzw. des Farbstoffes Q² unterscheiden, gleichzeitig oder nacheinander dosiert werden.

8. Verfahren nach den Ansprüchen 1 bis 7, **dadurch gekennzeichnet, daß** bei einer Partikelformation 2 oder 3 Prekursoren der allgemeinen Formel R¹R²R³SiR⁴, die sich in der chemischen Struktur des fluorophoren Systems bzw. des Farbstoffes Q² unterscheiden, gleichzeitig oder nacheinander dosiert werden.

9. Verfahren nach den Ansprüchen 1 bis 8, **dadurch gekennzeichnet, daß** die Prekursoren der allgemeinen Formel R¹R²R³SiR⁴ entweder als isolierte chemische Verbindung oder als in situ-Syntheseprodukt, gelöst in einem mit dem Hydrolysemedium kompatiblen Lösungsmittel, bei der Partikelformation dosiert werden.

10. Verfahren nach den Ansprüchen 1 bis 9, **dadurch gekennzeichnet, daß** die hydrolytische Polykondensation der Prekursoren bei Temperaturen zwischen 40 °C und 70 °C durchgeführt wird.

11. Verfahren nach den Ansprüchen 1 bis 10, **dadurch gekennzeichnet, daß** die hydrolytische Polykondensation in einem rotierenden Reaktionsgefäß ausgeführt wird.

12. Verfahren nach den Ansprüchen 1 bis 11, **dadurch gekennzeichnet, daß** die hydrolytische Polykondensation in Gegenwart eines oder mehrerer Additive aus den Bereichen Tenside, Metallsalze, -oxide, -hydroxyde und -alkoxyde bzw. Koordinationsverbindungen und freie Liganden ausgeführt wird.

13. Monodisperse sphärische Polykieselsäure-Partikel, **dadurch gekennzeichnet, daß** sie einstellbare Teilchendurchmesser zwischen 0,05 µm und 10 µm sowie eine homogene und hohe farbstoff-bzw. Fluoreszenzfarbstoff-Dichte bzw. Farb-/Fluoreszenzintensität aufweisen.

14. Polykieselsäure-Partikel nach Anspruch 13, **dadurch gekennzeichnet, daß** sie homogen gefärbt sind.

15. Polykieselsäure-Partikel nach den Ansprüchen 13 bis 14, **dadurch gekennzeichnet, daß** sie in verschiedenen definierten Wellenlängenbereichen, die sich sowohl innerhalb als auch außerhalb des sichtbaren Spektrums befinden können, fluoreszieren.

16. Polykieselsäure-Partikel nach den Ansprüchen 13 bis 14, **dadurch gekennzeichnet, daß** sie gleichzeitig in mehreren, vorzugsweise in 2 oder 3, definierten Wellenlängenbereichen, die sich sowohl innerhalb als auch außerhalb des sichtbaren Spektrums befinden können, fluoreszieren.

17. Polykieselsäure-Partikel nach den Ansprüchen 13 bis 16, **dadurch gekennzeichnet, daß** sie auf der Oberfläche funktionelle Gruppen, Sequenzen, Partial- oder makromolekulare Strukturen tragen, die durch Substitutions- oder Additionsreaktionen erzeugt werden.

18. Polykieselsäure-Partikel nach den Ansprüchen 13 bis 17, **dadurch gekennzeichnet, daß** sie aus Mischungen von Polykieselsäure-Partikeln bestehen, die sich hinsichtlich des Teilchendurchmessers, der Farb-/Fluoreszenzeigenschaften und der Oberflächenfunktionalität unterscheiden können.

## Claims

1. A process for producing monodisperse polysilicic acid particles, wherein the formation of particles occurs by simultaneous or consecutive dosage of the precursors tetraalkoxysilane and terminally silylated (fluorescent) dye of the general formula R¹R²R³SiR⁴, in which R¹, R² and R³ are equal or different and stand for halogen, alkyl, aryl, alkoxy or silyloxy groups and R⁴ possesses the complex structure Q¹-Xₘ-Yₙ-Q², wherein m and n can assume values of nought or one, Q¹ represents an alkyl chain or a hetero-analogous structure with preferably 1 to 20 chain-links, X stands for a functional sequence, Y assumes a bifunctional organic sequence with chain or cyclic structure connected in a suitable manner to Q² and wherein Q² stands for a fluorophore or a dye molecule structurally offering the possibility to bind to Y or in case of n is nought to X or in case of both m and n are nought to Q¹, to a hydrolysis medium consisting of alcohol, ammonia and water and leads to particles in monodisperse distribution and with adjustable diameters between 0.05 µm and 10 µm as well as with high density of (fluorescent) dye and colour/fluorescence intensity

2. The process according to claim 1, wherein the functional sequence X in R⁴ stands for carbonyl, oxycarbonyl, aminocarbonyl and aminothiocarbonyl groups or for a heteroatom, for instance oxygen, nitrogen or sulphur, respectively.

3. The process according to claims 1 to 2, wherein the bifunctional sequence Y in R⁴ preferably stands for an alkylene unit or substituted and hetero-analogous alkylene groups which are connected with Q² via carbon, nitrogen, or sulphur atoms, for instance as ester or amide.

4. The process according to claims 1 to 3, wherein the bifunctional sequence Y in R⁴ stands for structural elements of hydroxy- or aminocarboxylic acids as well as their esters and amides.

5. The process according to claims 1 to 4, wherein the alkoxy groups of precursors possess chain-lengths of 1 to 5 carbon atoms and preferably stand for ethoxy groups.

6. The process according to claims 1 to 5, wherein the ratio of precursors is adjusted in that way that the bound (fluorescent) dye possesses an amount of 0.01 to 5 mole per cent.

7. The process according to claims 1 to 6, wherein several precursors of the general formula R¹R²R³SiR⁴, which differ in the constitution of bound sequence Q¹-Xₘ-Yₙ-Q² and in chemical structure of the fluorophore or dye Q², are dosed simultaneously or consecutively during particle formation.

8. The process according to claims 1 to 7, wherein 2 or 3 precursors of the general formula R¹R²R³SiR⁴, which differ in chemical structure of the fluorophore or dye Q², are dosed simultaneously or consecutively during particle formation.

9. The process according to claims 1 to 8, wherein the precursors of the general formula R¹R²R³SiR⁴ either as isolated chemical compound or as an product of in situ synthesis dissolved in a solvent being compatible with used hydrolysis medium are dosed during particle formation.

10. The process according to claims 1 to 9, wherein the hydrolytic polycondensation of precursors is carried out at temperatures between 40 °C and 70 °C.

11. process according to claims I to 10, wherein the hydrolytic polycondensation is performed in a rotating vessel.

12. The process according to claims 1 to 11, wherein the hydrolytic polycondensation is performed in the presence of one or several additives selected from the group consisting of detergents, metal salts, oxides, hydroxides and alkoxides or coordination compounds and free ligands, respectively.

13. Monodisperse spherical polysilicic acid particles, wherein they possess adjustable particles diameters between 0.05 µm and 10 µm as well as a homogeneous and high density of dye or fluorescent dye and colour/fluorescence intensity, respectively.

14. Polysilicic acid particles according to claim 13, wherein they are homogeneously dyed.

15. Polysilicic acid particles according to claims 13 to 14, wherein they are fluorescent in different defined wavelength ranges which can be located as well inside as outside of the visible spectrum.

16. Polysilicic acid particles according to claims 13 to 14, wherein they are coincidentally fluorescent in several, but preferably in 2 or 3 defined wavelength ranges, which can be located as well inside as outside of the visible spectrum.

17. Polysilicic acid particles according to claims 13 to 16, wherein they possess functional groups, sequences, partial or macromolecular structures on their surface generated by substitution or addition reaction.

18. Polysilicic acid particles according to claims 13 to 17, wherein they consist in a mixture of polysilicic acid particles, which differ in particle diameter, colour/fluorescence properties and surface functionality.

## Revendications

1. Procédé de préparation de particules monodispersées d'acide polysilicique, **caractérisé en ce que** la formation des particules est réalisée par ajouts simultanés ou successifs des précurseurs que constituent le tétra-alcoxysilane et une substance (fluorescente)colorante à terminaison silylée de formule générale R¹R²R³SiR⁴, dans laquelle R¹, R² et R³ sont identiques ou différents et représentent des atomes d'halogènes, des groupes alkyle, aryle, alcoxy, ou silyloxy, et R⁴ possède la structure complexe Q¹-Xₘ-Yₙ-Q² dans laquelle m et n peuvent prendre une valeur nulle ou égale à 1, Q¹ représente une chaîne alkyle ou une structure hétéro-analogue comportant, de préférence, 1 à 20 motifs, X représente une séquence fonctionnelle, Y représente une séquence organique bifonctionnelle ayant une structure en chaîne ou cyclique qui est liée à Q² d'une façon appropriée, et dans laquelle Q² représente un système fluorogène ou une molécule colorante qui offre la possibilité structurelle de se lier à Y, ou, lorsque n est égal à zéro, à X, ou encore, lorsque m et n sont égaux à zéro, à Q¹, dans un milieu d'hydrolyse composé d'alcool, d'ammoniaque, et d'eau; et **en ce qu'**elle conduit à des particules ayant une répartition monodispersée, possédant des diamètres particulaires qui peuvent être ajustés entre 0,05 µm et 10 µm, ainsi qu'une densité de matière colorante (fluorescente) et/ou une intensité de coloration / fluorescence homogènes et élevées.

2. Procédé selon la revendication 1, **caractérisé en ce que** la séquence fonctionnelle X de R⁴ représente des groupes carbonyle, oxycarbonyle, aminocarbonyle, ou bien aminothiocarbonyle, ou un hétéroatome comme par exemple l'oxygène, l'azote, ou le soufre.

3. Procédé selon les revendications 1 à 2, **caractérisé en ce que** la séquence bifonctionnelle Y de R⁴ représente, de préférence, une unité alkyle ou des groupes alkyles hétéro-analogues substitués, qui sont liés à Q² par l'intermédiaire d'un atome de carbone, d'azote, d'oxygène, ou de soufre, par exemple sous la forme d'un ester ou d'un amide.

4. Procédé selon les revendications 1 à 3, **caractérisé en ce que** la séquence bifonctionnelle Y de R⁴ représente des éléments structuraux de type acides hydroxycarboxyliques ou aminocarboxyliques ainsi que leurs esters et amides.

5. Procédé selon les revendications 1 à 4, **caractérisé en ce que** les groupes alcoxy présents dans les précurseurs possèdent des longueurs de chaîne de 1 à 4 atomes de carbone, et représentent, de préférence, des groupes éthoxy.

6. Procédé selon les revendications 1 à 5, **caractérisé en ce que** la proportion de précurseurs est ajustée de façon à ce que la matière colorante (fluorescente) liée représente une part de 0,01 à 5 % en moles.

7. Procédé selon les revendications 1 à 6, **caractérisé en ce que**, lors de la formation des particules, on ajoute, simultanément ou successivement, plusieurs précurseurs de formule générale R¹R²R³SiR⁴ qui diffèrent par la constitution de la séquence Q¹-Xₘ-Yₙ-Q² engagée et par la structure chimique du système fluorogène et/ou de la matière colorante Q².

8. Procédé selon les revendications 1 à 7, **caractérisé en ce que**, lors de la formation des particules, on ajoute, simultanément ou successivement, 2 ou 3 précurseurs de formule générale R¹R²R³SiR⁴ qui diffèrent par la structure chimique du système fluorogène et/ou de la matière colorante Q².

9. Procédé selon les revendications 1 à 8, **caractérisé en ce que** les précurseurs de formule générale R¹R²R³SiR⁴ sont ajoutés, lors de la formation des particules, soit sous la forme d'un composé chimique isolé, soit sous la forme d'un produit synthétisé in-situ, dissous dans un solvant compatible avec le milieu d'hydrolyse.

10. Procédé selon les revendications 1 à 9, **caractérisé en ce que** la polycondensation hydrolytique des précurseurs est réalisée à des températures comprises entre 40 °C et 70 °C.

11. Procédé selon les revendications 1 à 10, **caractérisé en ce que** la polycondensation hydrolytique est effectuée dans une cuve réactionnelle rotative.

12. Procédé selon les revendications 1 à 11, **caractérisé en ce que** la polycondensation hydrolytique est effectuée en présence d'un ou de plusieurs additifs choisis dans la gamme des tensioactifs, des sels métalliques, des oxydes métalliques, des hydroxydes métalliques, et des alcoxydes métalliques, ou bien des composés de coordination et des ligands libres.

13. Particules d'acide polysilicique sphériques et monodispersées, **caractérisées en ce qu'**elles possèdent un diamètre particulaire pouvant être ajusté entre 0,05 µm et 10 µm, ainsi qu'une densité de la matière colorante et de la substance fluorescente et / ou une intensité de la coloration et de la fluorescence homogènes et élevées.

14. Particules d'acide polysilicique selon la revendication 13, **caractérisées en ce qu'**elles sont uniformément colorées.

15. Particules d'acide polysilicique selon les revendications 13 à 14, **caractérisées en ce qu'**elles sont fluorescentes dans plusieurs intervalles précis de longueurs d'ondes qui peuvent aussi bien se trouver dans les limites du spectre visible qu'en dehors de celles-ci.

16. Particules d'acide polysilicique selon les revendications 13 à 14, **caractérisées en ce qu'**elles sont fluorescentes simultanément dans plusieurs, de préférence dans 2 ou 3, intervalles précis de longueurs d'ondes qui peuvent aussi bien se trouver dans les limites du spectre visible qu'en dehors de celles-ci.

17. Particules d'acide polysilicique selon les revendications 13 à 16, **caractérisées en ce qu'**elles comportent, en surface, des groupes fonctionnels, des séquences fonctionnelles, des structures fonctionnelles partielles ou macromoléculaires qui sont engendrés par des réactions de substitution ou d'addition.

18. Particules d'acide polysilicique selon les revendications 13 à 17, **caractérisées en ce qu'**elles sont composées de mélanges de particules d'acide polysilicique qui peuvent différer au niveau de leur diamètre particulaire, de leurs caractéristiques de coloration / fluorescence, et de leurs fonctionnalités surfaciques.
